# EUROPEAN PATENT SPECIFICATION

(11) **EP 4 160 749 B1**
(45) Date of publication and mention of the grant of the patent: **26.08.2026**
(21) Application number: 22816325.9
(22) Date of filing: 06.05.2022
(51) Int. Cl.: H01M 4/04, H01M 4/36, H01M 4/38, H01M 4/525, H01M 4/62, H01M 10/44, H01M 10/42

(54) **LITHIUM SECONDARY BATTERY CONTAINING POSITIVE ELECTRODE ADDITIVE**
LITHIUMSEKUNDÄRBATTERIE MIT POSITIVEM ELEKTRODENZUSATZ
BATTERIE SECONDAIRE AU LITHIUM CONTENANT UN ADDITIF D'ÉLECTRODE POSITIVE

(30) Priority: 01.06.2021 KR 20210070875
(43) Date of publication of application: 05.04.2023
(73) Proprietor: LG Energy Solution, Ltd., Seoul 07335 (KR)
(72) Inventor: KIM, Hye Hyeon, Daejeon 34122 (KR); OH, Sang Seung, Daejeon 34122 (KR); JO, Chi Ho, Daejeon 34122 (KR)
(74) Representative: Hoffmann Eitle
(86) International application number: PCT/KR2022/006461
(87) International publication number: WO 2022/255666

(56) References cited:
- EP-A1- 4 195 329
- EP-A1- 4 199 156
- KR-A- 20030 076 153
- KR-A- 20190 059 115
- KR-A- 20190 064 423
- KR-A- 20190 119 963
- KR-A- 20200 041 171
- KR-A- 20200 066 048
- US-B2- 10 256 469
- US-B2- 10 263 294

## Description

### [Technical Field]

The present disclosure relates to a lithium secondary battery containing a positive electrode additive, and more particularly, a lithium secondary battery containing a positive electrode additive in a positive electrode mixture layer.

### [Background]

Recently, the demand for secondary batteries serving as energy sources is rapidly increasing. Among these secondary batteries, lithium secondary batteries having a high energy density and voltage, a long cycle life, and a low self-discharge rate have been commercialized and widely used.

Graphite is mainly used as a negative electrode material of a lithium secondary battery, but since graphite has a small capacity per unit mass of 372 mAh/g, it is difficult to increase the capacity of the lithium secondary battery. Accordingly, in order to increase the capacity of the lithium secondary battery, negative electrode materials that form an intermetallic compound with lithium, such as silicon, tin, and oxides thereof, are being developed and used as a non-carbon-based negative electrode material having a higher energy density than graphite. However, in the case of such a non-carbon-based negative electrode material, there is a problem that although the capacity is large, the initial efficiency is low, the lithium consumption during initial charging and discharging is large, and the irreversible capacity loss is large.

In this regard, a method has been proposed to provide a lithium ion source or storage for a positive electrode material and overcome the irreversible capacity loss of a negative electrode by using a material that is electrochemically active after a first cycle so as not to degrade the overall performance of the battery. Specifically, a method of applying an oxide containing an excess of lithium, such as Li₆CoO₄, serving as a sacrificial positive electrode material or an irreversible additive (or an over-discharge inhibitor) to a positive electrode is known.

Meanwhile, conventional irreversible additives such as Li₆CoO₄ and the like are generally prepared by reacting cobalt oxide or the like with an excess of lithium oxide. The irreversible additives prepared in this way are structurally unstable so that a large amount of oxygen (O₂) gas may be generated charging proceeds, and when the secondary battery is initially charged, that is, when all of the irreversible additive remains unreacted upon activation of the battery, a reaction may occur in the subsequent charging/discharging process to generate a side reaction or a large amount of oxygen gas inside the battery. The oxygen gas generated in this way may cause volume expansion of the electrode assembly and acts as one of main factors leading to deterioration of battery performance.

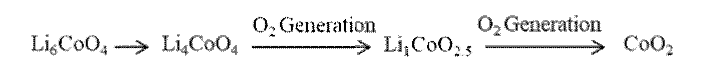

Further, the conventionally used irreversible additives exhibit a very low powder electrical conductivity of 10⁻¹¹ S/cm or less, which is close to that of an insulator, due to a two-dimensional (2D) percolating network. The low powder electrical conductivity increases the electrical resistance of a positive electrode, and in this case, a large capacity of 200 mAh/g or more is exhibited at a low C-rate, whereas, when the C-rate increases, and performance is rapidly reduced due to the large resistance as charging and discharging proceed, and thus there is a limitation in that the charge/discharge capacity of the battery is reduced and fast charging/discharging is difficult.

Therefore, the development of a lithium secondary battery with improved battery safety as well as excellent electrical performance is required.

### [Document of Related Art]

### [Patent Document]

Korean Laid-open Patent Publication No. 10-2019-0064423

EP 4 195 329 A1 describes a positive electrode additive for a lithium secondary battery wherein the additive contains a carbon material adsorbed on to a surface of a lithium cobalt oxide represented by LiₚCo_{(1-q)}M¹_{q}O₄ where M¹ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are 5≤p≤7 and 0≤q≤0.5, respectively..

EP 4 199 156 A1 describes a master batch for a positive electrode additive, comprising 0.5 to 50 parts by weight of a lithium cobalt oxide with respect to 100 parts by weight of a first positive electrode active material, the lithium cobalt oxide represented by LiₚCo_{1-q}M¹_{q}O₂ where M¹ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are 5≤p≤7 and 0≤q≤0.4, respectively.

US 10 256 469 B2 describes a high-capacity nonaqueous electrolyte secondary battery that includes a positive electrode containing a positive electrode active material, a negative electrode, and a nonaqueous electrolyte. The positive electrode contains the active material composed of a lithium transition metal oxide and a positive electrode additive composed of an oxide that contains Li and at least two elements other than Li and oxygen and has an antifluorite structure. The nonaqueous electrolyte secondary battery obtained is charged until the potential of the positive electrode is 4.0 V or higher and 4.65 V or lower (vs. Li/Li+).

### [Technical Problem]

An object of the present technology is to provide a lithium secondary battery having excellent electrical performance and improved safety.

### [Technical Solution]

The present technology is directed to solving the above-described problem and provides a lithium secondary battery including an electrolyte and an elecrode assembly, wherein the electrode assembly includes a positive electrode, a negative electrode, and a separator interposed between the positive electrode and the negative electrode, wherein the positive electrode includes a positive electrode current collector and a positive electrode mixture layer positioned on the positive electrode current collector, wherein the positive electrode mixture layer contains a positive electrode active material represented by Chemical Formula 2 below, a positive electrode additive represented by Chemical Formula 1 below, a conductive material, and a binder, and
wherein a content of the positive electrode additive ranges from 0.1 to 5 parts by weight with respect to 100 parts by weight of the positive electrode mixture layer:

   [Chemical Formula 1] LiₚCo_{(1-q)}M¹_{q}O₄
wherein M¹ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
p and q are 5≤p≤7 and 0≤q≤0.5, respectively;

   [Chemical Formula 2] Liₓ[Ni_{y}Co_{z}Mn_{w}M²ᵥ]Oᵤ
wherein M² denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are 1.0≤x≤1.30, 0.1≤y<0.95, 0.01<z≤0.5, 0.01<w≤0.5, 0≤v≤0.2, and 1.5≤u≤4.5, respectively;
wherein the lithium secondary battery has been charged to a state of charge (SoC) of 100% in an activation process under conditions of a temperature of 40°C to 70°C, a voltage of 3.5 to 4.5 V and a current of 0.1 to 0.5 C, and satisfies Expression 1 below with 2.0 or more and 20.0 or less: ${A}_{LCO} / {A}_{0}$
wherein A_{LCO} represents a gas generation amount (mℓ/Ah) of carbon monoxide (CO) and carbon dioxide (CO₂) when the positive electrode contains the positive electrode additive represented by Chemical Formula 1, and A₀ represents a gas generation amount (mℓ/Ah) of carbon monoxide (CO) and carbon dioxide (CO₂) when the positive electrode mixture layer does not contain the positive electrode additive represented by Chemical Formula 1.

The lithium secondary battery may satisfy Expression 1 with 3.0 or more and 20.0 or less.

In the present technology, the positive electrode additive may have a tetragonal structure with a space group of P4₂/nmc.

The conductive material may include one or more materials selected from the group consisting of natural graphite, artificial graphite, carbon black, acetylene black, channel black, furnace black, lamp black, thermal black, graphene, and carbon nanotubes.

The conductive material may be included in an amount of 0.1 to 5 parts by weight with respect to 100 parts by weight of the positive electrode mixture layer.

In the lithium secondary battery according to the present technology, the negative electrode may include a negative electrode current collector and a negative electrode mixture layer positioned on the negative electrode current collector and containing a negative electrode active material. In addition, the negative electrode active material may contain a carbon material and a silicon material.

The silicon material may include one or more of silicon (Si) particles and silicon oxide (SiO_{X}, 1≤X≤2) particles, and the silicon material may be included in an amount of 1 to 20 parts by weight with respect to 100 parts by weight of the negative electrode mixture layer.

### [Advantageous Effects]

In the lithium secondary battery according to the present technology, a positive electrode can be manufactured by containing a positive electrode additive represented by Chemical Formula 1 in a positive electrode mixture layer serving as an irreversible additive, since a ratio of carbon monoxide and carbon dioxide generated during an activation process can be adjusted to satisfy a specific range according to whether the positive electrode additive is used, the content ratio of hydrogen and hydrocarbon with respect to a total amount of gases generated during the activation process can be reduced. Accordingly, the present technology has an advantage of improving the safety of the lithium secondary battery as well as improving charging and discharging efficiency of the lithium secondary battery.

### [Detailed Description]

While the present invention may have various modifications and alternative forms, specific embodiments thereof will be described in detail.

It should be further understood that the terms "comprise," "comprising," "include," and/or "including," when used herein, specify the presence of stated features, integers, steps, operations, components, parts, or combinations thereof, but do not preclude the presence or addition of one or more other features, integers, steps, operations, components, parts, or combinations thereof.

In addition, when a layer, film, region, or plate is referred to as being "formed on" another layer, film, region, or plate, it includes a case in which the layer, film, region, or plate is formed directly on another layer, film, region, or plate and a case in which still another layer, film, region, or plate is interposed between the layer, film, region, or plate, and another layer, film, region, or plate. In contrast, when a layer, film, region, or plate is referred to as being "formed below" another layer, film, region, or plate, it includes a case in which the layer, film, region, or plate is formed directly below another layer, film, region, or plate, and a case in which still another layer, film, region, or plate is interposed between the layer, film, region, or plate and another layer, film, region, or plate. Further, in this specification, when a component is referred to as being disposed "on" another component, it includes a case in which a component is disposed above another component and a case in which a component is disposed below another component.

In addition, in the present invention, the term "main component" may refer to a component in an amount of 50 wt% or more, 60 wt% or more, 70 wt% or more, 80 wt% or more, 90 wt% or more, 95 wt% or more, or 97.5 wt% or more with respect to a total weight of a composition or a specific component, and in some cases, may refer to a component constituting the entire composition or specific component, that is, a component in an amount of 100 wt%.

Further, in the present invention, "Ah" is a unit of capacity of a lithium secondary battery, is referred to as "ampere-hour," and is an amount of current per hour. For example, when a capacity of a battery is "3000 mAh," it means that the battery can be discharged for one hour with a current of 3000 mA.

Hereinafter, the present invention will be described in more detail.

### Lithium secondary battery

The present technology provides a lithium secondary battery including an electrode assembly including a positive electrode, a negative electrode, and a separator interposed between the positive electrode and the negative electrode, and the lithium secondary battery includes an electrolyte.

In this case, the positive electrode includes a positive electrode current collector, and a positive electrode mixture layer, which may be prepared be applying, drying, and pressing a positive electrode slurry on the positive electrode current collector, wherein the positive electrode mixture layer has a configuration including a positive electrode active material, a positive electrode additive, a conductive material, and a binder.

The positive electrode additive is a lithium cobalt oxide represented by Chemical Formula 1 below:

[Chemical Formula 1] LiₚCo_{(1-q)}M¹_{q}O₄

in Chemical Formula 1 above, M¹ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and q are 5≤p≤7 and 0≤q≤0.5, respectively.

The positive electrode additive may contain lithium in excess to provide lithium for lithium consumption caused by an irreversible chemical and physical reaction at a negative electrode during initial charging, and accordingly, the charging capacity of the battery may be increased and the irreversible capacity of the battery can be reduced, resulting in an improvement in lifetime characteristics of the battery.

Among positive electrode additives, the positive electrode additive represented by Chemical Formula 1 above has a higher amount of lithium ions than that of nickel-containing oxides commonly used in the art, and thus the lithium ions lost due to an irreversible reaction during initial activation of the battery may be replenished, thereby significantly improving the charge/discharge capacity of the battery. Further, in comparison to iron and/or manganese-containing oxides commonly used in the art, there is no side reaction that occurs due to the elution of transition metals during charging and discharging of the battery, and thus the battery has excellent stability. The lithium metal oxide represented by Chemical Formula 1 may include Li₆CoO₄, Li₆Co_{0.5}Zn_{0.5}O₄, Li₆Co_{0.7}Zn_{0.3}O₄, or the like.

Further, the positive electrode additive represented by Chemical Formula 1 may have a tetragonal crystal structure and may be included in a space group of P4₂/nmc having a twisted tetrahedral structure formed by a cobalt element and an oxygen element among the tetragonal crystal structures.

In addition, the positive electrode additive is included in an amount of 0.1 to 5 parts by weight with respect to 100 parts by weight of the positive electrode mixture layer, and specifically, may be included in an amount of 0.1 to 4.5 parts by weight, 0.3 to 4 parts by weight, 0.3 to 3.5 parts by weight, 0.5 to 3 parts by weight, 0.5 to 2.5 parts by weight, 0.7 to 2 parts by weight, or 0.7 to 1.8 parts by weight with respect to 100 parts by weight of the positive electrode mixture layer. In the present technology, by adjusting the amount of the positive electrode additive within the above range, it is possible to prevent the charge/discharge capacity from being lowered due to insufficient replenishment of lithium ions lost by the irreversible reaction because the amount of the positive electrode additive is low, and prevent a large amount of oxygen gas from being generated during charging and discharging of the battery due to an excessive amount of the positive electrode additive.

A ratio of carbon monoxide and carbon dioxide generated during the activation process can be adjusted to satisfy a specific range, and thus the safety of the battery can be improved and excellent performance may be realized during charging and discharging.

Specifically, there was a problem in that the conventionally used irreversible additives are structurally unstable so that a large amount of gas was generated charging proceeds. However, in the lithium secondary battery according to the present technology, where the positive electrode includes the positive electrode additive represented by Chemical Formula 1 in the positive electrode mixture layer, the content ratio of hydrogen and hydrocarbon to a total amount of gases generated in the activation process can be reduced. Accordingly, the safety of the battery can be improved and excellent performance may be realized during charging and discharging.

The lithium secondary battery according to the present technology is charged to a state of charge (SoC) of 100% in the activation process under conditions of a temperature of 40°C to 70°C, a voltage of 3.5 to 4.5 V and a current of 0.1 to 0.5 C, and then satisfies Expression 1 below representing a ratio (A_{LCO}/A₀) of a gas generation amount of carbon monoxide (CO) and carbon dioxide (CO₂) of the lithium secondary battery that contains the positive electrode additive represented by Chemical Formula 1 to a gas generation amount of carbon monoxide (CO) and carbon dioxide (CO₂) of the lithium secondary battery that does not contain the positive electrode additive, satisfying Expression 1 with 2.0 or more and 20.0 or less. Specifically, the lithium secondary battery may satisfy Expression 1 below with 2.5 or more, 3.0 or more, 3.2 or more, 3.5 or more, 2.5 to 20, 3.0 to 18, 3.2 to 16, or 3.5 to 15. ${A}_{LCO} / {A}_{0}$

In Expression 1, A_{LCO} represents a gas generation amount (mℓ/Ah) of carbon monoxide and carbon dioxide when the positive electrode mixture layer, and thus the positive electrode, contains the positive electrode additive represented by Chemical Formula 1, and A₀ represents a gas generation amount (mℓ/Ah) of carbon monoxide and carbon dioxide when the positive electrode mixture layer, and thus the positive electrode, does not contain the positive electrode additive represented by Chemical Formula 1.

The lithium secondary battery according to the present technology may be charged to an SoC of 100% in the activation process, and then may also satisfy Expression 2 below representing a ratio (B_{LCO}/B₀) of a gas generation amount of propene (C₃H₆) and propane (C₃H₈) of the lithium secondary battery that contains the positive electrode additive represented by Chemical Formula 1 to a gas generation amount of propene (C₃H₆) and propane (C₃H₈) of the lithium secondary battery that does not contain the positive electrode additive represented by Chemical Formula 1 with 0.8 or less. Specifically, the lithium secondary battery may satisfy Expression 2 below with 0.75 or less, 0.70 or less, 0.68 or less, 0.20 to 0.75, 0.30 to 0.70, or 0.40 to 0.68. ${B}_{LCO} / {B}_{0}$

In Expression 2, B_{LCO} represents a gas generation amount (mℓ/Ah) of propene (C₃H₆) and propane (C₃H₈) when the positive electrode mixture layer, and thus the positive electrode, contains the positive electrode additive represented by Chemical Formula 1, and B₀ represents a gas generation amount (mℓ/Ah) of propene (C₃H₆) and propane (C₃H₈) when the positive electrode mixture layer, and thus the positive electrode, does not contain the positive electrode additive represented by Chemical Formula 1.

That is, when the lithium secondary battery according to the present technology contains the positive electrode additive represented by Chemical Formula 1 after being charged to SoC 100% in the activation process, a total gas generation amount may be increased, but the ratio of carbon monoxide and carbon dioxide may be adjusted as described above, and thus the content ratio of hydrogen and hydrocarbon with respect to the total gas generation amount can be reduced.

Meanwhile, in the present technology, the gas generation amount is a gas generation amount (mℓ) with respect to a capacity (Ah) of each battery cell.

The positive electrode active material is a positive electrode active material which is capable of reversible intercalation and deintercalation, and includes a lithium metal composite oxide represented by Chemical Formula 2 below as a main component:

[Chemical Formula 2] Liₓ[Ni_{y}Co_{z}Mn_{w}M²ᵥ]Oᵤ

in Chemical Formula 2 above, M² denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are 1.0≤x≤1.30, 0.1≤y<0.95, 0.01<z≤0.5, 0.01<w≤0.5, 0≤v≤0.2, and 1.5≤u≤4.5, respectively.

The lithium metal composite oxide represented by Chemical Formula 2 is a composite metal oxide containing lithium and nickel, and may include one or more compounds selected from the group consisting of LiNi_{1/3}Co_{1/3}Mn_{1/3}O₂, LiNi_{0.8}Co_{0.1}Mn_{0.1}O₂, LiNi_{0.6}Co_{0.2}Mn_{0.2}O₂, LiNi_{0.9}Co_{0.05}Mn_{0.05}O₂, LiNi_{0.6}Co_{0.2}Mn_{0.1}Al_{0.1}O₂, LiNi_{0.6}Co_{0.2}Mn_{0.15}Al_{0.05}O₂, and LiNi_{0.7}Co_{0.1}Mn_{0.1}Al_{0.1}O₂.

Further, the content of the positive electrode active material may range from 85 to 95 parts by weight with respect to 100 parts by weight of the positive electrode mixture layer, and specifically, may range from 88 to 95 parts by weight, 90 to 95 parts by weight, 86 to 90 parts by weight, or 92 to 95 parts by weight.

In addition, the conductive material is a material used to improve electrical performance of the positive electrode, and the materials commonly used in the art may be applied thereto, and specifically, the conductive material may include one or more materials selected from the group consisting of natural graphite, artificial graphite, carbon black, acetylene black, Denka black, Ketjen black, super-P, channel black, furnace black, lamp black, thermal black, graphene, and carbon nanotubes.

As an example, carbon black or Denka black may be used alone or in combination as the conductive material.

Further, the conductive material may be included in an amount of 0.1 to 5 parts by weight with respect to 100 parts by weight of the positive electrode mixture layer, and specifically, may be included in an amount of 0.1 to 4 parts by weight, 2 to 4 parts by weight, 1.5 to 5 parts by weight, 1 to 3 parts by weight, 0.1 to 2 parts by weight, or 0.1 to 1 part by weight.

In addition, the binder serves to bind the positive electrode active material, the positive electrode additive, and the conductive material to each other, and any binder having such a function may be used without being particularly limited. Specifically, the binder may include one or more resins selected from the group consisting of a polyvinylidene fluoride-hexafluoropropylene copolymer (PVdF-co-HFP), polyvinylidene fluoride (PVdF), polyacrylonitrile, polymethylmethacrylate, and copolymers thereof. As an example, the binder may include polyvinylidene fluoride.

Further, the binder may be included in an amount of 1 to 10 parts by weight with respect to 100 parts by weight of the total amount of the positive electrode mixture layer, and specifically, may be included in an amount of 2 to 8 parts by weight or 1 to 5 parts by weight.

In addition, although an average thickness of the positive electrode mixture layer is not particularly limited, specifically, the average thickness may range from 50 µm to 300 µm, and more specifically, may range from 100 µm to 200 µm, 80 µm to 150 µm, 120 µm to 170 µm, 150 µm to 300 µm, 200 µm to 300 µm, or 150 µm to 190 µm.

Further, in the positive electrode current collector of the positive electrode, a material having high conductivity without causing a chemical change in the battery may be used. For example, stainless steel, aluminum, nickel, titanium, calcined carbon, or the like may be used, and when aluminum or stainless steel is used, a material surface-treated with carbon, nickel, titanium, the silver, or the like may be used. Further, the positive electrode current collector may have fine irregularities formed on a surface thereof to increase an adhesive force of the positive electrode active material and may be formed in various forms such as a film, a sheet, a foil, a net, a porous body, a foam body, a nonwoven body, and the like. In addition, an average thickness of the positive electrode current collector may be appropriately applied in a range of 3 to 500 µm in consideration of the conductivity and total thickness of the positive electrode to be manufactured.

In addition, the negative electrode of the lithium secondary battery according to the present technology may be manufactured by applying, drying, and pressing a negative electrode active material on a negative electrode current collector, and may optionally further include the same conductive material as in the positive electrode, an organic binder polymer, an additive, and the like as necessary.

Further, the negative electrode active material may include, for example, a carbon material and a silicon material. The carbon material is a carbon material containing a carbon element as a main component, and examples of the carbon material may include graphite with a completely layered crystal structure like natural graphite, soft carbon having a low crystallinity layered crystal structure (graphene structure; a structure in which hexagonal honeycomb planes of carbon are arranged in layers), hard carbon in which these structures are mixed with amorphous parts, artificial graphite, expanded graphite, carbon fiber, non-graphitizable carbon, carbon black, acetylene black, Ketjen black, carbon nanotubes, fullerenes, activated carbon, graphene, carbon nanotubes, and the like, and preferably, may include one or more materials selected from the group consisting of natural graphite, artificial graphite, graphene, and carbon nanotubes. More preferably, the carbon material may include natural graphite and/or artificial graphite and may include any one or more of graphene and carbon nanotubes together with the natural graphite and/or artificial graphite. In this case, the carbon material may include 0.1 to 10 parts by weight of graphene and/or carbon nanotubes with respect to 100 parts by weight of the total amount of the carbon material, and more specifically, may include 0.1 to 5 parts by weight or 0.1 to 2 parts by weight of graphene and/or carbon nanotubes with respect to 100 parts by weight of the total amount of the carbon material.

Further, the silicon material has particles containing silicon (Si), which is a metal component, as a main component and may include one or more of silicon (Si) particles and silicon oxide (SiO_{X}, 1≤X≤2) particles. As an example, the silicon material may include silicon (Si) particles, silicon monoxide (SiO) particles, silicon dioxide (SiO₂) particles, or a mixture thereof.

In addition, the silicon material may have a form in which crystalline particles and amorphous particles are mixed, and a proportion of the amorphous particles may range from 50 to 100 parts by weight with respect to 100 parts by weight of the total amount of the silicon material, and specifically, may range from 50 to 90 parts by weight, 60 to 80 parts by weight, or 85 to 100 parts by weight. In the present technology, by controlling the proportion of the amorphous particles contained in the silicon material within the above range, thermal stability and flexibility can be improved in a range in which the electrical properties of the electrode are not degraded.

Further, the negative electrode active material may include a carbon material and a silicon material, wherein the silicon material may be included in an amount of 1 to 20 parts by weight with respect to 100 parts by weight of a negative electrode mixture layer, and specifically, may be included in an amount of 5 to 20 parts by weight, 3 to 10 parts by weight, 8 to 15 parts by weight, 13 to 18 parts by weight, or 2 to 7 parts by weight with respect to 100 parts by weight of the negative electrode mixture layer.

In the present technology, by adjusting the amounts of the carbon material and the silicon material contained in the negative electrode active material within the above ranges, the charging capacity per unit mass can be improved while reducing lithium consumption and irreversible capacity loss during initial charging and discharging of the battery.

As an example, the negative electrode active material may include 95±2 parts by weight of graphite with respect to 100 parts by weight of the negative electrode mixture layer, and 5±2 parts by weight of a mixture in which silicon monoxide (SiO) particles and silicon dioxide (SiO₂) particles are uniformly mixed. In the present technology, by adjusting the amounts of the carbon material and the silicon material contained in the negative electrode active material within the above ranges, the charging capacity per unit mass can be improved while reducing lithium consumption and irreversible capacity loss during initial charging and discharging of the battery.

Further, the negative electrode mixture layer may have an average thickness of 100 µm to 200 µm, and specifically, may have an average thickness of 100 µm to 180 µm, 100 µm to 150 µm, 120 µm to 200 µm, 140 µm to 200 µm, or 140 µm to 160 µm.

In addition, the negative electrode current collector is not particularly limited as long as it has high conductivity without causing a chemical change in the battery, and for example, copper, stainless steel, nickel, titanium, calcined carbon, or the like may be used in the negative electrode current collector, and when copper or stainless steel is used, a material surface-treated with carbon, nickel, titanium, silver, or the like may be used. Further, the negative electrode current collector, like the positive electrode current collector, may have fine irregularities formed on a surface thereof to strengthen a bonding force with the negative electrode active material, and may be formed in various forms such as a film, a sheet, a foil, a net, a porous body, a foam body, a nonwoven body, and the like. In addition, an average thickness of the negative electrode current collector may be appropriately applied in a range of 3 to 500 µm in consideration of the conductivity and total thickness of a negative electrode to be manufactured.

Further, the separator is interposed between the positive electrode and the negative electrode, and an insulating thin film having high ion permeability and mechanical strength is used as the separator. The separator is not particularly limited as long as it is commonly used in the art, and specifically, a sheet or non-woven fabric made of chemical-resistant and hydrophobic polypropylene, glass fiber, polyethylene, or the like may be used, and in some cases, a composite separator in which a porous polymer base material such as a sheet or nonwoven fabric is coated with inorganic particles/organic particles by an organic binder polymer may be used. When a solid electrolyte such as a polymer or the like is used as an electrolyte, the solid electrolyte may also serve as a separator. In addition, pores of the separator may have an average diameter of 0.01 to 10 µm and an average thickness of 5 to 300 µm.

Meanwhile, the positive electrode and the negative electrode may be wound in the form of a jelly roll, and may be accommodated in a cylindrical battery, a prismatic battery, or a pouch-type battery or accommodated in a pouch-type battery in a folding or stack-and-folding form, but the present technology is not limited thereto.

Further, a lithium salt-containing electrolyte according to the present technology may consist of an electrolyte and a lithium salt, and examples of the lithium salt-containing electrolyte may include a non-aqueous organic solvent, an organic solid electrolyte, an inorganic solid electrolyte, and the like.

Examples of the non-aqueous organic solvent may include an aprotic organic solvent such as N-methyl-2-pyrrolidinone, ethylene carbonate (EC), propylene carbonate, butylene carbonate, dimethyl carbonate (DMC), diethyl carbonate, gamma-butyrolactone, 1,2-dimethoxyethane, tetrahydroxy franc, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ether, methyl propionate, ethyl propionate, etc.

Examples of the organic solid electrolyte may include polyethylene derivatives, polyethylene oxide derivatives, polypropylene oxide derivatives, phosphoric acid ester polymers, poly agitation lysine, polyester sulfide, polyvinyl alcohol, polyvinylidene fluoride, polymeric materials containing ionic dissociation groups, etc.

Examples of the inorganic solid electrolyte may include nitrides, halides, sulfates, etc. of Li such as Li₃N, LiI, Li₅Ni₂, Li₃N-LiI-LiOH, LiSiO₄, LiSiO₄-LiI-LiOH, Li₂SiS₃, Li₄SiO₄, Li₄SiO₄-LiI-LiOH, Li₃PO₄-Li₂S-SiS₂, or the like.

The lithium salt is a material that is easily soluble in a non-aqueous electrolyte, and examples of the lithium salt may include LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, chloroborane lithium, lithium lower aliphatic carboxylates, lithium 4-phenylboronate, imide, etc.

Further, for the purpose of improving charging and discharging characteristics, flame retardancy, etc., pyridine, triethylphosphite, triethanolamine, cyclic ether, ethylene diamine, n-glyme, hexaphosphoric acid triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride, etc. may be added to the electrolyte. In some cases, in order to impart incombustibility, a halogen-containing solvent such as carbon tetrachloride, ethylene trifluoride, etc. may be further included, and in order to improve high-temperature storage characteristics, carbon dioxide gas may be further included and fluoroethylene carbonate (FEC), propene sultone (PRS), etc. may be further included.

### Method of activating lithium secondary battery

The present disclosure provides a method of activating a lithium secondary battery, which includes a process of charging the lithium secondary battery to an SoC of 10% to 100% under conditions of a temperature of 40°C to 70°C, a voltage of 3.5 to 4.5 V and a current of 0.1 to 0.5 C.

In a lithium secondary battery, when initial charging is performed, lithium ions derived from lithium transition metal oxides, such as a positive electrode active material, a positive electrode additive, and the like contained in a positive electrode, move to a carbon electrode as a negative electrode, and since the lithium ions are highly reactive, the lithium ions react with the carbon negative electrode to form a compound such as Li₂CO₃, LiO, LiOH, or the like, and a solid electrolyte interphase (SEI) film is formed on a surface of the negative electrode by such a compound. The SEI film is an insulator formed when a mobile amount of ions in the battery is increased, and when the SEI film is formed, the SEI film prevents the lithium ions from reacting with other materials at the negative electrode when the secondary battery is charged later, and the SEI film functions as a type of ion tunnel to allow only the lithium ions to pass therethrough. After the SEI film is formed, the lithium ions do not react with the negative electrode or other materials, and thus an amount of lithium ions may be reversibly maintained and the charging and discharging of the secondary battery may be reversibly maintained, resulting in an improvement of the lifetime of the secondary battery, and the SEI film does not easily collapse even when the battery is left at a high temperature or is repeatedly charged and discharged, and there is also less variation in the thickness of the battery.

Accordingly, in the activation method according to the present technology, the lithium ions derived from the positive electrode active material and/or the positive electrode additive of the positive electrode form the SEI film on the surface of the negative electrode, a current is applied to the lithium secondary battery to induce delithiation and decomposition of the positive electrode additive, and thus the gas derived from the positive electrode additive can be formed inside the battery at the same time as charging the battery.

Further, the activation operations may be performed at a higher temperature than room temperature in order to lower the resistance of the electrode. Specifically, each of the activation operations may be performed under a condition of temperature of 40 °C to 70 °C, and more specifically, may be performed under a condition of temperature of 40 °C to 60 °C, 45 °C to 60 °C, 50 °C to 65 °C, 50 °C to 60 °C, or 52 °C to 58 °C. In the present technology, the secondary battery may be charged under a condition of a lower resistance of the positive electrode by performing each activation operation under a temperature condition satisfying the above range, and thus the efficiency of the activation method may be increased and the uniformity of the SEI film formed in a first activation operation can be improved.

In addition, each of the activation operations may be performed for 1 minute to 100 minutes, and specifically, may be performed for 1 minute to 100 minutes, 1 minute to 60 minutes, 1 minute to 40 minutes, 10 minutes to 40 minutes, 20 minutes to 40 minutes, 10 minutes to 30 minutes, or 1 minute to 10 minutes.

Furthermore, a process of degassing the gas formed inside the lithium secondary battery on which the activation operations have been performed may be performed. In the lithium secondary battery on which the activation operations have been performed, a large amount of gas is generated due to the delithiation and/or decomposition of the positive electrode additive contained in the mixture layer of the positive electrode, and when the generated gas is not removed, a phenomenon in which the battery swells together with the gas may be caused. However, in the present technology, the swelling phenomenon can be prevented by additionally performing degassing on the lithium secondary battery after the activation operations are performed.

Here, the degassing may be performed by pressurizing an outer surface of the lithium secondary battery using a pressurizing device such as a jig, and the pressurization may be performed at 10 to 900 kgf/cm² for 4 to 6 seconds, but the present technology is not limited thereto.

**In** this case, the gas removed when the degassing is performed on the lithium secondary battery satisfies Expression 1 with 2.0 or more and 20.0 or less. ${A}_{LCO} / {A}_{0}$

In Expression 1, A_{LCO} represents a gas generation amount (mℓ/Ah) of carbon monoxide (CO) and carbon dioxide (CO₂) when the positive electrode contains the positive electrode additive represented by Chemical Formula 1, and A₀ represents a gas generation amount (mℓ/Ah) of carbon monoxide (CO) and carbon dioxide (CO₂) when the positive electrode does not contain the positive electrode additive represented by Chemical Formula 1.

Furthermore, the method of activating the lithium secondary battery according to the present technology may further include an aging operation of aging the activated lithium secondary battery after a third activation operation is performed. The aging operation may allow the SEI film to be more stabilized and reformed to have a uniform thickness by thermal energy and electrochemical energy. To this end, the aging operation may be performed at 20 to 40 °C, and specifically, may be performed at 20 to 30 °C or 20 to 25 °C for 0.5 hours to 30 hours.

Hereinafter, the present invention will be described in more detail with reference to examples and comparative examples.

### Example 1.

### 1) Manufacture of lithium secondary battery

96 parts by weight of LiNi_{0.6}Co_{0.2}Mn_{0.1}Al_{0.1}O₂ as a positive electrode active material, 1 part by weight of Li₆CoO₄ as a positive electrode additive, 2 parts by weight of PVdF as a binder, and 3 parts by weight of carbon black as a conductive material were weighed (positive electrode active material:positive electrode additive=99.15:0.85) and mixed in an N-methylpyrrolidone (NMP) solvent to prepare a slurry for a positive electrode mixture layer. The slurry for a positive electrode mixture layer was applied on an aluminum foil, dried and then rolled to form a positive electrode including a positive electrode mixture layer (average thickness: 130 µm).

Natural graphite as a negative electrode active material, a carbon black conductive material, and a PVdF binder were mixed in an N-methylpyrrolidone solvent in a weight ratio of 85:10:5 to prepare a slurry for a negative electrode mixture layer, and the slurry for a negative electrode mixture layer was applied on a copper foil to manufacture a negative electrode including a negative electrode mixture layer (average thickness: 180 µm).

A separator (thickness: about 16 µm) made of a porous polyethylene (PE) film was laminated to be interposed between the manufactured positive electrode and the manufactured negative electrode to manufacture an electrode assembly. After the electrode assembly was placed inside a battery case, an electrolyte was injected into the case, and then the electrode assembly was left at room temperature for 3 days so that the electrolyte was fully impregnated, thereby manufacturing a lithium secondary battery. In this case, the electrolyte was prepared by dissolving lithium hexafluorophosphate (LiPF₆) at a concentration of 1.0 M in an organic solvent consisting of EC/DMC/ethyl methyl carbonate (EMC) (the mixing volume of EC/DMC/EMC is 3/4/3).

### 2) Activation of lithium secondary battery

An activation operation was performed on the manufactured lithium secondary battery. Specifically, the activation operation was performed at a temperature of 55 °C, and the activation operation was performed on the lithium secondary battery by charging the secondary battery so that capacity (SoC) became 100% under conditions of a constant current of 0.2 C and a voltage of 4.3 V. After charging, gases in the battery were degassed using a jig.

### Examples 2 and 3 and Comparative Examples 1 to 3. Manufacture and activation of lithium secondary batteries

Lithium secondary batteries were manufactured in the same manner as in Example 1 except that the amounts of a positive electrode active material and a positive electrode additive were changed when the lithium secondary batteries were manufactured. An activation operation was performed on the manufactured lithium secondary batteries.

In this case, compositions of respective positive electrodes manufactured in the examples and comparative examples are shown in Table 1 below.

**[Table 1]**

| | Composition of slurry for manufacturing positive electrode (parts by weight) | | | | |
|---|---|---|---|---|---|
| | Positive electrode active material (LiNi_{0.6}Co_{0.2}Mn_{0 .1}Al_{0.1}O₂) | Positive electrode additive (Li₆CoO₄) | Positive electrode active material: positive electrode additive | Binder (PVdF) | Conductive material (carbon black) |
| Example 2 | 95.0 | 0.9 | 99.15:0.85 | 1.6 | 2.5 |
| Example 3 | 94.3 | 1.6 | 98.5:1.5 | 1.6 | 2.5 |
| Comparative Example 1 | 95.9 | | - | 1.6 | 2.5 |
| Comparative Example 2 | 95.6 | 0.3 | 99.7:0.3 | 1.6 | 2.5 |
| Comparative Example 3 | 89.6 | 6.3 | 94:6 | 1.6 | 2.5 |

### Experimental Example.

In order to evaluate performance of the positive electrode for a lithium secondary battery according to the present technology, experiments were performed as described below.

### A. Analysis of components and amounts of gases generated during activation process

The components and amounts of respective gases generated inside the lithium secondary battery during the activation process (formation) of the lithium secondary battery according to the examples and comparative examples were analyzed, and results of the analysis are shown in Table 2 below.

**[Table 2]**

| Units (mℓ) | Example 1 | Example 2 | Comparative Example 1 | Comparative Example 2 | Comparative Example 3 |
|---|---|---|---|---|---|
| Hydrogen (H₂) | 7.4 | 9.7 | 4.1 | 5.2 | 10.2 |
| Carbon monoxide (CO) | 7.2 | 18 | 3.2 | 5.0 | 25.8 |
| Carbon dioxide (CO₂) | 9.5 | 45 | 1.4 | 2.5 | 80.1 |
| Methane (CH₄) | 2.8 | 3.9 | 0.6 | 1.0 | 4.5 |
| Acetylene (C₂H₂) | 0 | 0 | 0 | 0 | 0 |
| Ethene (C₂H₄) | 36 | 44 | 28 | 32 | 46 |
| Ethane (C₂H₆) | 1.2 | 1.7 | 0.5 | 1.0 | 2.5 |
| Propene (C₃H₆) | 0.3 | 0.2 | 0.5 | 0.4 | 0.1 |
| Propane (C₃H₈) | 0 | 0 | 0 | 0 | 0 |
| Total gas generation amount (mℓ) | 64.4 | 122.5 | 38.3 | 47.1 | 169.2 |
| Cell capacity (Ah) | 80.31 | 79.63 | 77.87 | 78.39 | 88.22 |
| Gas generation amount with respect to cell capacity (mℓ /Ah) | 0.80 | 1.54 | 0.49 | 0.60 | 1.92 |

As shown in Table 2 above, the lithium secondary batteries that contained the positive electrode additive had a higher gas generation amount than the lithium secondary battery that did not contain the positive electrode additive. In particular, it can be seen that the gas generation amount (mℓ/Ah) with respect to the cell capacity increased as the amount of the positive electrode additive increased.

The amounts of carbon monoxide and carbon dioxide generated inside the lithium secondary batteries during the activation process (formation) of the lithium secondary batteries according to the examples and comparative examples were evaluated, and results of the evaluation are shown in Table 3 below.

**[Table 3]**

| Units (mℓ) | Example 1 | Example 2 | Comparative Example 1 | Comparative Example 2 | Comparative Example 3 |
|---|---|---|---|---|---|
| Carbon monoxide (CO) | 7.2 | 18 | 3.2 | 5.0 | 25.8 |
| Carbon dioxide (CO₂) | 9.5 | 45 | 1.4 | 2.5 | 80.1 |
| Gas generation amount of | 16.7 | 63 | 4.6 | 7.5 | 105.9 |
| (CO&CO₂) | | | | | |
| Cell capacity (Ah) | 80.31 | 79.63 | 77.87 | 78.39 | 80.22 |
| Gas generation amounts of CO and CO₂ (mℓ /Ah) with respect to cell capacity | 0.21 | 0.79 | 0.06 | 0.09 | 1.32 |
| A_{LCO}/A₀ | 3.5 | 13.17 | - | 1.5 | 22.0 |

Referring to Table 3 above, the lithium secondary batteries that contained the positive electrode additive had higher gas generation amounts of carbon monoxide and carbon dioxide than the lithium secondary battery that did not contain the positive electrode additive. In particular, it can be seen that the gas generation amounts of carbon monoxide and carbon dioxide increased as the amount of the positive electrode additive increased. The amounts of hydrogen and hydrocarbon, excluding carbon monoxide and carbon dioxide among the gases generated during the activation process, are shown in Table 4 below.

**[Table 4]**

| Units (mℓ) | Example 1 | Example 2 | Comparative Example 1 | Comparative Example 2 | Comparative Example 3 |
|---|---|---|---|---|---|
| Hydrogen (H₂) | 7.4 | 9.7 | 4.1 | 5.2 | 10.2 |
| Methane (CH₄) | 2.8 | 3.9 | 0.6 | 1.0 | 4.5 |
| Acetylene (C₂H₂) | 0 | 0 | 0 | 0 | 0 |
| Ethene (C₂H₄) | 36 | 44 | 28 | 32 | 46 |
| Ethane (C₂H₆) | 1.2 | 1.7 | 0.5 | 1.0 | 2.5 |
| Propene (C₃H₆) | 0.3 | 0.2 | 0.5 | 0.4 | 0.1 |
| Propane (C₃H₈) | 0 | 0 | 0 | 0 | 0 |
| Gas generation amounts of hydrogen and hydrocarbon | 47.7 | 59.5 | 33.7 | 39.6 | 63.3 |
| Total gas generation amount | 64.4 | 122.5 | 38.3 | 47.1 | 169.2 |
| Gas generation amounts of hydrogen and hydrocarbon with respect to total gas | 0.74 | 0.49 | 0.87 | 0.84 | 0.37 |
| generation amount | | | | | |

Referring to Table 4 above, it was confirmed that the total amount of the gases generated in the activation process increased when the positive electrode additive was used, but by adjusting the ratio of carbon monoxide and carbon dioxide to satisfy a specific range, the content ratio of hydrogen and hydrocarbon with respect to the total amount of the gases generated during the activation process was reduced. In particular, in the case of Example 2, it was confirmed that the gas generation amounts of hydrogen and hydrocarbon with respect to the total gas generation amount was 0.49. It was confirmed that the lithium secondary batteries that were activated according to the conditions of the examples and comparative examples satisfied an A_{LCO}/A₀ value with 3.0 or more through the gas component and content analysis.

On the other hand, for the activated lithium secondary battery of Comparative Example 3, it was determined that the total gas generation amount was too high, i.e., 169.2 mℓ, causing volume expansion of the electrode assembly, or the like, which results in deterioration of the performance of the battery.

In addition, the amounts of propene and propane generated inside the lithium secondary batteries during the activation process (formation) of the lithium secondary batteries according to the examples and comparative examples were evaluated, and results of the evaluation are shown in Table 5 below.

**[Table 5]**

| Units (mℓ) | Example 1 | Example 2 | Comparative Example 1 | Comparative Example 2 | Comparative Example 3 |
|---|---|---|---|---|---|
| Propene (C₃H₆) | 0.3 | 0.2 | 0.5 | 0.4 | 0.1 |
| Propane (C₃H₈) | 0 | 0 | 0 | 0 | 0 |
| Gas generation amounts of C₃H₆ and C₃H₈ | 0.3 | 0.2 | 0.5 | 0.4 | 0.1 |
| Cell capacity (Ah) | 80.31 | 79.63 | 77.87 | 78.39 | 80.22 |
| Gas generation amounts (mℓ/Ah) of C₃H₆ and C₃H₈ relative with respect to cell capacity | 0.004 | 0.003 | 0.006 | 0.005 | 0.001 |
| B_{LCO}/B₀ | 0.67 | 0.5 | - | 0.83 | 0.16 |

It was confirmed that the lithium secondary batteries that were activated according to the conditions of the examples and comparative examples satisfied Expression 2 below with 0.8 or less through the gas component and content analysis.

### Cycle life performance evaluation

The lithium secondary batteries that were activated in the examples and comparative examples were discharged to 2 V (C-rate=0.1C), and then a capacity retention rate [%] was measured while charging and discharging 100 times (n=100) at 25 °C under conditions of a charge termination voltage of 4.25 V, a discharge termination voltage of 2.5 V, and 0.5 C/0.5 C. In this case, the capacity retention rate was calculated using Equation 1 below, and results of the calculation are shown in Table 6 below: 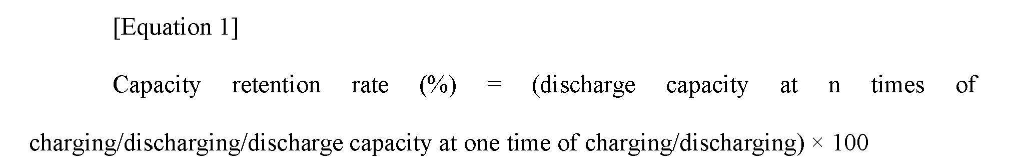 Capacity retention rate (%) = (discharge capacity at n times of charging/discharging/discharge capacity at one time of charging/discharging) × 100

**[Table 6]**

| | Initial charge capacity [mAh/g] | Capacity retention rate [%] after 100 times of charging/discharging |
|---|---|---|
| Example 1 | 712 | 98% |
| Example 2 | 721 | 97% |
| Comparative Example 1 | 709 | 89% |
| Comparative Example 2 | 706 | 92% |
| Comparative Example 3 | 692 | 94% |

Referring to Table 6 above, it was confirmed that the lithium secondary batteries that were activated in the examples had an initial charge capacity of 710 mAh/g or more, and had a capacity retention rate of 97% or more after 100 times of charging and discharging, whereas the lithium secondary batteries that were activated in the comparative examples had a lower initial charging capacity and capacity retention rate after 100 times of charging and discharging than those of the lithium secondary batteries of the examples.

It was confirmed from the above results that, in the lithium secondary battery according to the present technology, the gas generation amounts of carbon monoxide and carbon dioxide increased as the amount of the positive electrode additive, serving as an irreversible additive, represented by Chemical Formula 1 contained in the positive electrode mixture layer increased, but by adjusting the ratio of carbon monoxide and carbon dioxide within the specific range, the content ratio of hydrogen and hydrocarbon with respect to the total amount of the gases generated during the activation process was reduced. Accordingly, the lithium secondary battery of the present technology has an advantage in that not only safety can be improved, but also charging and discharging efficiency of the lithium secondary battery can be easily improved.

## Claims

1. A lithium secondary battery comprising:
an electrolyte; and
an electrode assembly,
wherein the electrode assembly comprises a positive electrode, a negative electrode, and a separator interposed between the positive electrode and the negative electrode,
wherein the positive electrode comprises a positive electrode current collector and a positive electrode mixture layer positioned on the positive electrode current collector,
wherein the positive electrode mixture layer comprises a positive electrode active material represented by Chemical Formula 2 below, a positive electrode additive represented by Chemical Formula 1 below, a conductive material, and a binder, and
wherein a content of the positive electrode additive ranges from 0.1 to 5 parts by weight with respect to 100 parts by weight of the positive electrode mixture layer:
[Chemical Formula 1] LiₚCo_{(1-q)}M¹_{q}O₄
wherein M¹ denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and p and
q are 5≤p≤7 and 0≤q≤0.5, respectively;
[Chemical Formula 2] Liₓ[Ni_{y}Co_{z}Mn_{w}M²ᵥ]Oᵤ
wherein M² denotes one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and x, y, z, w, v, and u are 1.0≤x≤1.30, 0.1≤y<0.95, 0.01<z≤0.5, 0.01<w≤0.5, 0≤v≤0.2, and 1.5≤u≤4.5, respectively;
**characterized in that** the lithium secondary battery has been charged to a state of charge (SoC) of 100% in an activation process under conditions of a temperature of 40°C to 70°C, a voltage of 3.5 V to 4.5 V and a current of 0.1 to 0.5 C: and satisfies Expression 1 below with 2.0 or more and 20.0 or less: ${A}_{LCO} / {A}_{0}$
wherein A_{LCO} represents a gas generation amount (mℓ/Ah) of carbon monoxide (CO) and carbon dioxide (CO₂) when the positive electrode mixture layer comprises the positive electrode additive represented by Chemical Formula 1, and
A₀ represents a gas generation amount (mℓ/Ah) of carbon monoxide (CO) and carbon dioxide (CO₂) when the positive electrode mixtures layer does not comprise the positive electrode additive represented by Chemical Formula 1.

2. The lithium secondary battery of claim 1, wherein the lithium secondary battery satisfies Expression 1 with 3.0 or more and 20.0 or less.

3. The lithium secondary battery of claim 1, wherein the positive electrode additive has a tetragonal structure with a space group of P4₂/nmc.

4. The lithium secondary battery of claim 1, wherein the conductive material comprises one or more materials selected from the group consisting of natural graphite, artificial graphite, carbon black, acetylene black, channel black, furnace black, lamp black, thermal black, graphene, and carbon nanotubes.

5. The lithium secondary battery of claim 1, wherein the conductive material is comprised in an amount of 0.1 to 5 parts by weight with respect to 100 parts by weight of the positive electrode mixture layer.

6. The lithium secondary battery of claim 1, wherein the negative electrode comprises a negative electrode current collector, and a negative electrode mixture layer that is positioned on the negative electrode current collector and comprises a negative electrode active material,
wherein the negative electrode active material comprises a carbon material and a silicon material.

7. The lithium secondary battery of claim 6, wherein the silicon material comprises one or more of silicon (Si) particles and silicon oxide (SiO_{X}, 1≤X≤2) particles.

8. The lithium secondary battery of claim 6, wherein the silicon material is comprised in an amount of 1 to 20 parts by weight with respect to 100 parts by weight of the negative electrode mixture layer.

## Patentansprüche

1. Lithiumsekundärbatterie, umfassend:
einen Elektrolyten; und
eine Elektrodenanordnung,
worin die Elektrodenanordnung eine positive Elektrode, eine negative Elektrode und einen zwischen der positiven Elektrode und der negativen Elektrode geschalteten Separator umfasst,
worin die positive Elektrode einen Stromabnehmer für eine positive Elektrode und eine auf dem Stromabnehmer für eine positive Elektrode positionierte Mischschicht für eine positive Elektrode umfasst,
worin die Mischschicht für eine positive Elektrode ein durch nachfolgende chemische Formel 2 dargestelltes Aktivmaterial für eine positive Elektrode, ein durch nachfolgende chemische Formel 1 dargestelltes Additiv für eine positive Elektrode, ein leitfähiges Material und ein Bindemittel umfasst, und
worin ein Gehalt des Additivs für eine positive Elektrode im Bereich von 0,1 bis 5 Gewichtsteile, in Bezug auf 100 Gewichtsteile der Mischschicht für eine positive Elektrode, liegt:
[chemische Formel 1] LiₚCo_{(1-q)}M¹_{q}O₄
worin M¹ eines oder mehrere Elemente bezeichnet, ausgewählt aus der Gruppe, bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, und
p und q 5≤p≤7 bzw. 0≤q≤0,5 sind;
[chemische Formel 2] Liₓ[Ni_{y}Co_{z}Mn_{w}M²ᵥ]Oᵤ
worin M² eines oder mehrere Elemente bezeichnet, ausgewählt aus der Gruppe, bestehend aus W, Cu, Fe, V, Cr, Ti, Zr, Zn, Al, In, Ta, Y, La, Sr, Ga, Sc, Gd, Sm, Ca, Ce, Nb, Mg, B und Mo, und x, y, z, w, v und u 1,0≤x≤1,30, 0,1≤y<0,95, 0,01<z≤0,5, 0,01<w≤0,5, 0≤v≤0,2 bzw. 1,5≤u≤4,5 sind;
**dadurch gekennzeichnet, dass** die Lithiumsekundärbatterie in einem Aktivierungsprozess unter Bedingungen einer Temperatur von 40 °C bis 70 °C, einer Spannung von 3,5 V bis 4,5 V und eines Stroms von 0,1 bis 0,5 C auf einen Ladezustand (SoC - "state of charge") von 100% geladen wurde und den nachfolgenden Ausdruck 1 mit einem Wert von 2,0 oder mehr und 20,0 oder weniger erfüllt: ${A}_{LCO} / {A}_{0}$
worin A_{LCO} die Gasentwicklungsmenge (mℓ/Ah) an Kohlenmonoxid (CO) und Kohlendioxid (CO₂) darstellt, wenn die Mischschicht für eine positive Elektrode das durch die chemische Formel 1 dargestellte Additiv für eine positive Elektrode umfasst, und
A₀ die Gasentwicklungsmenge (mℓ/Ah) an Kohlenmonoxid (CO) und Kohlendioxid (CO₂) darstellt, wenn die Mischschicht für eine positive Elektrode das durch die chemische Formel 1 dargestellte Additiv für eine positive Elektrode nicht umfasst.

2. Lithiumsekundärbatterie gemäß Anspruch 1, worin die Lithiumsekundärbatterie Ausdruck 1 mit 3,0 oder mehr und 20,0 oder weniger erfüllt.

3. Lithiumsekundärbatterie gemäß Anspruch 1, worin das Additiv für eine positive Elektrode eine tetragonale Struktur mit einer Raumgruppe P4₂/nmc aufweist.

4. Lithiumsekundärbatterie gemäß Anspruch 1, worin das leitfähige Material eine oder mehrere Materialien umfasst, ausgewählt aus der Gruppe, bestehend aus natürlichem Graphit, künstlichem Graphit, Ruß, Acetylenruß, Kanalruß, Ofenruß, Flammruß, Lampenruß, Thermalruß, Graphen und Kohlenstoffnanoröhren.

5. Lithiumsekundärbatterie gemäß Anspruch 1, worin das leitfähige Material in einer Menge von 0,1 bis 5 Gewichtsteilen, in Bezug auf 100 Gewichtsteile der Mischschicht für eine positive Elektrode, umfasst ist.

6. Lithiumsekundärbatterie gemäß Anspruch 1, worin die negative Elektrode einen Stromabnehmer für eine negative Elektrode und eine Mischschicht für eine negative Elektrode, die auf dem Stromabnehmer für eine negative Elektrode positioniert ist und ein Aktivmaterial für eine negative Elektrode umfasst,
worin das Aktivmaterial für eine negative Elektrode ein Kohlenstoffmaterial und ein Siliciummaterial umfasst.

7. Lithiumsekundärbatterie gemäß Anspruch 6, worin das Siliciummaterial eines oder mehrere von Silicium-Teilchen (Si) und Siliciumdioxid-Teilchen (SiO_{X}, 1≤X≤2) umfasst.

8. Lithiumsekundärbatterie gemäß Anspruch 6, worin das Siliciummaterial in einer Menge von 1 bis 20 Gewichtsteilen, in Bezug auf 100 Gewichtsteile der Mischschicht für eine negative Elektrode, umfasst ist.

## Revendications

1. Batterie secondaire au lithium comprenant :
un électrolyte ; et
un ensemble d'électrodes ;
dans laquelle l'ensemble d'électrodes comprend une électrode positive, une électrode négative et un séparateur interposé entre l'électrode positive et l'électrode négative,
dans laquelle l'électrode positive comprend un collecteur de courant d'électrode positive et une couche de mélange d'électrode positive positionnée sur le collecteur de courant d'électrode positive,
dans laquelle la couche de mélange d'électrode positive comprend un matériau actif d'électrode positive représenté par la formule chimique 2 ci-dessous, un additif d'électrode positive représenté par la formule chimique 1 ci-dessous, un matériau conducteur et un liant, et
dans laquelle une teneur en l'additif d'électrode positive va de 0,1 à 5 parties en poids par rapport à 100 parties en poids de la couche de mélange d'électrode positive :
[Formule chimique 1] LiₚCo_{(1-q)}M¹_{q}O₄
dans laquelle M¹ désigne un ou plusieurs éléments sélectionnés dans le groupe consistant en W, Cu, Fe, V, Cr, Ti, Zr, Zn, Al, In, Ta, Y, La, Sr, Ga, Sc, Gd, Sm, Ca, Ce, Nb, Mg, B et Mo, et p et
q sont 5≤p≤7 et 0≤q≤0,5, respectivement ;
[Formule chimique 2] Liₓ[Ni_{y}Co_{z}Mn_{w}M²ᵥ]Oᵤ
dans laquelle M² désigne un ou plusieurs éléments sélectionnés dans le groupe consistant en W, Cu, Fe, V, Cr, Ti, Zr, Zn, Al, In, Ta, Y, La, Sr, Ga, Sc, Gd, Sm, Ca, Ce, Nb, Mg, B et Mo, et x, y, z, w, v et u sont 1,0≤x≤1,30, 0,1≤y<0,95, 0,01<z≤0,5, 0,01<w≤0,5, 0≤v≤0,2, et 1,5≤u≤4,5, respectivement ;
**caractérisé en ce que** la batterie secondaire au lithium a été chargée à un état de charge (SoC) de 100 % dans un processus d'activation dans des conditions de température de 40 °C à 70 °C, de tension de 3,5 V à 4,5 V et de courant de 0,1 à 0,5 C : et satisfait à l'expression 1 ci-dessous avec 2,0 ou plus et 20,0 ou moins : ${A}_{LCO} / {A}_{0}$
dans laquelle A_{LCO} représente une quantité de génération de gaz (ml/Ah) de monoxyde de carbone (CO) et de dioxyde de carbone (CO₂) lorsque la couche de mélange d'électrode positive comprend l'additif d'électrode positive représenté par la Formule chimique 1, et
A₀ représente une quantité de génération de gaz (ml/Ah) de monoxyde de carbone (CO) et de dioxyde de carbone (CO₂) lorsque la couche de mélange d'électrode positive ne comprend pas l'additif d'électrode positive représenté par la Formule chimique 1.

2. Batterie secondaire au lithium selon la revendication 1, dans laquelle la batterie secondaire au lithium satisfait à l'expression 1 avec 3,0 ou plus et 20,0 ou moins.

3. Batterie secondaire au lithium selon la revendication 1, dans laquelle l'additif d'électrode positive présente une structure tétragonale avec un groupe spatial P4₂/nmc.

4. Batterie secondaire au lithium selon la revendication 1, dans laquelle le matériau conducteur comprend un ou plusieurs matériaux sélectionnés dans le groupe consistant en le graphite naturel, le graphite artificiel, le noir de carbone, le noir d'acétylène, le noir au tunnel, le noir de fourneau, le noir de lampe, le noir thermique, le graphène et les nanotubes de carbone.

5. Batterie secondaire au lithium selon la revendication 1, dans laquelle le matériau conducteur est compris en une quantité de 0,1 à 5 parties en poids par rapport à 100 parties en poids de la couche de mélange d'électrode positive.

6. Batterie secondaire au lithium selon la revendication 1, dans laquelle l'électrode négative comprend un collecteur de courant d'électrode négative et une couche de mélange d'électrode négative qui est positionnée sur le collecteur de courant d'électrode négative et comprend un matériau actif d'électrode négative,
dans laquelle le matériau actif d'électrode négative comprend un matériau carboné et un matériau de silicium.

7. Batterie secondaire au lithium selon la revendication 6, dans laquelle le matériau de silicium comprend une ou plusieurs parmi des particules de silicium (Si) et des particules d'oxyde de silicium (SiO_{X}, 1≤X≤2).

8. Batterie secondaire au lithium selon la revendication 6, dans laquelle le matériau de silicium est compris en une quantité de 1 à 20 parties en poids par rapport à 100 parties en poids de la couche de mélange d'électrode négative.
